# EUROPEAN PATENT APPLICATION

(11) **EP 1 310 461 A1**
(43) Date of publication of application: **14.05.2003**
(21) Application number: 01954428.7
(22) Date of filing: 03.08.2001
(51) Int. Cl.: C02F 3/12, C02F 11/00

(54) **METHOD FOR TREATING ORGANIC WASTE WATER**

(30) Priority: 03.08.2000 JP 2000235971; 21.03.2001 JP 2001081109
(71) Applicant: COSMO OIL CO., LTD, Minato-ku, Tokyo 105-8528 (JP)
(72) Inventor: OHTSUKA, Hiroaki, Cosmo Oil Co., Ltd., Satte-shi, Saitama 340-0193 (JP); FUJITA, Ken, Cosmo Oil Co., Ltd., Satte-shi, Saitama 340-0193 (JP); WATANABE, Keitaro, Cosmo Oil Co., Ltd., Satte-shi, Saitama 340-0193 (JP); TANAKA, Toru, Cosmo Oil Co., Ltd., Satte-shi, Saitama 340-0193 (JP); KUMAGAI, Hitoshi, Cosmo Oil Co., Ltd., Satte-shi, Tokyo 340-0193 (JP); KAWANO, Koichi, Cosmo Oil Co., Ltd., Satte-shi, Saitama 340-0193 (JP)
(74) Representative: HOFFMANN - EITLE
(86) International application number: JP0106687
(87) International publication number: WO02012134

(57) **Abstract**

Novel methods for treating organic waste water are provided which can remarkably reduce the amount of excess sludge resulting from the biological treatment of organic waste waters. The methods for treating organic waste water comprise: biologically treating the organic waste water; subjecting the resulting biologically treated mixture to a solid-liquid separation; subjecting sludge resulting from a solid-liquid separation to a solubilization treatment for solubilizing an organic matter contained therein; and returning the sludge to the biological-treatment tank, wherein (a) the solubilization treatment is a specific treatment which is a combination of a treatment with an alkali and one or more other certain treatments or (b) a concentrated sludge phase obtained by the solid-liquid separation from the sludge which has been subjected to the solubilization treatment is repeatedly circulated in the solubilization treatment, or both (a) and (b) are carried out.

## Description

### TECHNICAL FIELD

The present invention relates to methods for treating organic waste water, e.g., by the activated sludge method in which organic waste water is aerobically treated with activated sludge. More particularly, the present invention relates to methods for treating organic waste water in which the biological treatment of the organic waste water is carried out in combination with a sludge solubilization treatment and which can remarkably reduce the amount of excess sludge to be produced.

### BACKGROUND ART

The most serious problem in biological oxidation treatment steps heretofore in use, such as activated sludge methods, is that excess sludge is produced in large amounts. Although the sludge has been disposed of through sludge treatments such as dewatering, drying, and incineration, the disposal is highly costly and necessitates a high equipment cost. The amount of excess sludge which is produced in active sludge methods heretofore in use is generally from 0.6 to 0.8 kg·ss (sludge) per kg of the BOD (biochemical oxygen demand) to be removed. Namely, it is well known that the active-sludge methods produce extremely large quantities of excess sludge. In addition, since the excess sludge is difficult to dewater by nature, the disposal thereof is becoming increasingly difficult.

Accordingly, expedients have hitherto been taken for the volume reduction of excess sludge produced in large quantities as described above. As such expedients for volume reduction, methods in which excess sludge is aerobically or anaerobically digested are carried out. Among these methods, the aerobic digestion comprises merely aerating and digesting excess sludge in a digestion tank, subjecting the aerated sludge to a solid-liquid separation, and returning the separated sludge to the digestion tank. The anaerobic digestion comprises introducing excess sludge into a digestion tank and digesting the sludge by the activity of anaerobic bacteria. In such digestion methods, the activity of aerobic or anaerobic microorganisms is utilized to conduct digestion. However, since the excess sludge itself is biologically stable sludge resulting from a biological treatment, there are limitations in the volume reduction of sludge. Usually, the attainable volume reduction is as small as 30 to 40% based on the excess sludge.

A method for diminishing the limitations in the digestion methods described above is proposed in JP-B-49-11813 and U.S. Patent 3,622,507 (1970). In the method, an alkali is added to excess sludge, the mixture is heated to dissolve alkali-soluble suspended matters, subsequently the mixture is neutralized, and the resultant decomposition liquid is returned to the initial activated sludge treatment system. Furthermore, JP-B-6-61550 proposes a method which comprises adding an alkali to excess sludge, keeping the mixture at ordinary or an elevated temperature for a prolonged time period to thereby obtain a decomposition liquid without via a neutralization treatment, and returning the decomposition liquid to the initial activated sludge treatment system. However, the method proposed in JP-B-49-11813 has a problem that since an alkali is used in a large amount, the subsequent neutralization treatment necessitates a large amount of an acid. Furthermore, the omission of the neutralization treatment as in the method proposed in JP-B-6-61550 has a problem that it is necessary to considerably prolong the period of the solubilization treatment with an alkali.

A method for mitigating the problems of the methods described above, which use an alkali, is proposed in JP-B-57-19719. In the method for treating excess sludge, the excess sludge is treated with ultrasonic, a homogenizer, a mixer, or abrupt pressure fluctuations to thereby cause destruction or the excess sludge is subjected to oxidative decomposition with ozone gas. Although the method is effective in destroying or decomposing cell walls and cell membranes contained in the sludge, it has a problem that since the sludge residue resulting from such destruction or decomposition has a high molecular weight and poor solubility in water and is poorly decomposable by activated sludge, it impairs the quality of the treated water to be obtained through an activated sludge treatment.

### DISCLOSURE OF THE INVENTION

An object of the present invention is to provide novel methods for treating organic waste water which eliminate the above-described problems of related-art techniques and which can remarkably reduce the amount of excess sludge resulting from the biological treatment of organic waste waters.

In order to accomplish the above object, the present invention provides the following methods for treating organic waste water (1) to (3).
(1) A method for treating organic waste water, which comprises: biologically treating organic waste water in a biological-treatment tank; subjecting the resulting biologically treated mixture to a solid-liquid separation; subjecting a part or all of sludge resulting from the solid-liquid separation to a solubilization treatment for solubilizing an organic matter contained in the sludge; and returning the sludge to the biological-treatment tank, wherein the solubilization treatment is a treatment with an alkali and at least one treatment selected from a treatment with a homogenizer, a treatment with a mixer, a treatment with a mill, a treatment with a high pressure and instantaneous decompression expansion, and a treatment with an oxidizing agent.
(2) A method for treating organic waste water, which comprises: biologically treating organic waste water in a biological-treatment tank; subjecting the resulting biologically treated mixture to a solid-liquid separation; subjecting a part or all of sludge resulting from the solid-liquid separation to a solubilization treatment for solubilizing an organic matter contained in the sludge; and returning the sludge to the biological-treatment tank, wherein the sludge which has been subjected to a solubilization treatment is subjected to a solid-liquid separation, a part or all of the concentrated sludge phase resulting from the solid-liquid separation is circulated at least once to the solubilization treatment, and the sludge mother-liquor phase resulting from the solid-liquid separation is returned to the biological-treatment tank.
(3) A method for treating organic waste water, which comprises: biologically treating organic waste water in a biological-treatment tank; subjecting the biologically treated mixture to a solid-liquid separation; subjecting a part or all of sludge resulting from the solid-liquid separation to a solubilization treatment for solubilizing an organic matter contained in the sludge; and returning the sludge to the biological-treatment tank, wherein the sludge which has been subjected to a solubilization treatment is subjected to a solid-liquid separation, a part or all of the concentrated sludge phase resulting from the solid-liquid separation is circulated at least once to the solubilization treatment, the sludge mother-liquor phase resulting from the solid-liquid separation is returned to the biological-treatment tank, and the solubilization treatment is a treatment with an alkali and at least one treatment selected from a treatment with a homogenizer, a treatment with a mixer, a treatment with a mill, a treatment with a high pressure and instantaneous decompression expansion, a treatment with an oxidizing agent, a treatment with heating, and a treatment with ultrasonic.

### BRIEF DESCRIPTION OF THE DRAWINGS

Fig. 1 is a flow sheet showing a treatment system for one embodiment of the method (1) of the present invention described above.
Fig. 2 is a flow sheet showing a treatment system for one embodiment of the method (2) of the present invention described above.
Fig. 3 is a flow sheet showing a treatment system for another embodiment of the method (2) of the present invention described above.
Fig. 4 is a flow sheet showing a general treatment system for the standard activated sludge method heretofore in use.

### BEST MODE FOR CARRYING OUT THE INVENTION

The methods for treating organic waste water (1) to (3) of the present invention described above can be applied to various biological treatments of organic waste water which produce excess sludge. The biological treatment may be either an aerobic biological treatment or an anaerobic biological treatment. Examples of the aerobic biological treatment include an activated sludge method, a biofilm method, and the like. The activated sludge method is a treatment method in which organic waste water is subjected to an aerobic biological treatment in the presence of activated sludge. The method is generally the standard activated sludge method comprising mixing organic waste water with activated sludge in an aeration tank, aerating the resultant mixture, thickening the mixed liquor with a thickener, and returning a part of the concentrated sludge to the aeration tank. However, the activated sludge method may be a modification of the standard method. The biofilm method is a method in which a biofilm is formed on a support and aerobically brought into contact with organic waste water. On the other hand, examples of the anaerobic biological treatment include a so-called anaerobic digestion method, a high-load anaerobic treatment method, and the like. The methods for the present invention can be advantageously applied to the activated sludge method, which is frequently employed for the treatment of organic waste waters, among those various biological treatments of organic waste water. The present invention will be explained below in detail using the activated sludge method as an example, by reference to the accompanying drawings.

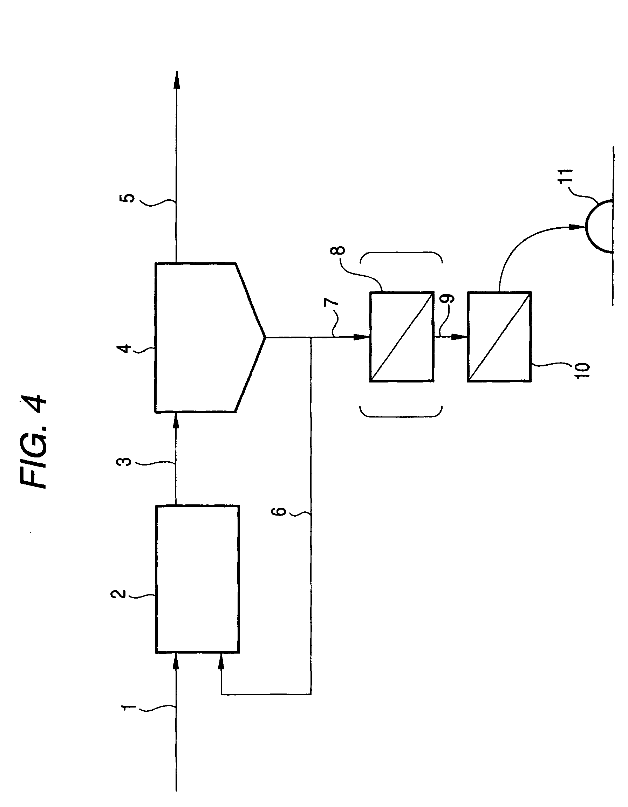

A flow sheet of the general treatment system for the standard activated sludge method heretofore in use is shown in Fig. 4. In the treatment system showing a flow sheet in Fig. 4, organic waste water is fed through a line 1 to an aeration tank 2. In the aeration tank 2, the waste water is aerated and aerobically and biologically treated with activated sludge. The resultant mixture is then sent to a sludge sedimentation tank 4 through a line 3. The supernatant which has been accumulated in the sludge sedimentation tank 4 is discharged therefrom as treated water through a line 5. On the other hand, the sludge sediment which has been accumulated in the sludge sedimentation tank 4 is returned as a return sludge to the aeration tank 2 through a line 6, during which part of the return sludge is taken out and introduced as excess sludge through a line 7 and a line 9 into a sludge dewatering step 10 and dewatered, optionally after having been fed to a sludge thickening step 8 and thickened to a higher solid concentration. The resultant dewatered excess sludge 11 is discharged from the system.

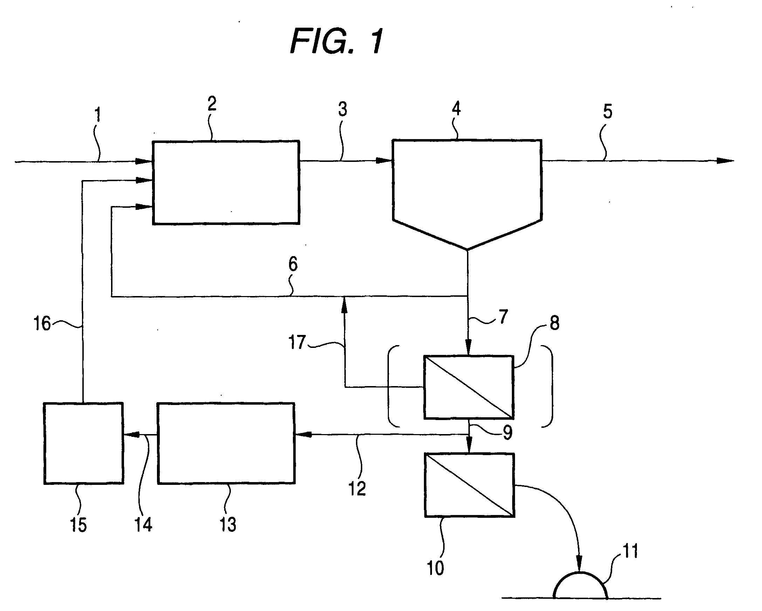

An embodiment of the method (1) of the present invention described above is an application of the method (1) of the present invention to the above-described standard activated sludge method heretofore in use. A flow sheet of the treatment system in the case is shown in Fig. 1. The method (1) of the present invention is explained by reference to Fig. 1. In the treatment system for the embodiment of the method (1) of the present invention showing a flow sheet in Fig. 1, organic waste water is fed through a line 1 to an aeration tank 2. In the aeration tank 2, the waste water is aerated and aerobically and biologically treated with activated sludge. The resultant mixture is then sent to a sludge sedimentation tank 4 through a line 3. The supernatant which has been accumulated in the sludge sedimentation tank 4 is discharged therefrom as treated water through a line 5, while the sludge sediment which has been accumulated in the sludge sedimentation tank 4 is returned as a return sludge to the aeration tank 2 through a line 6. To this step, the flow sheet is the same as the flow sheet for the above-described treatment system for the standard activated sludge method heretofore in use. Thereafter, a part of the return sludge is taken out and is optionally fed through a line 7 to a sludge thickening step 8 and thickened to a solid concentration of about from 0.5 to 5% by weight. Subsequently, a part of the excess sludge is introduced through a line 9 into a sludge dewatering step 10 and dewatered, and the resultant dewatered excess sludge 11 is discharged from the system. Another part of the excess sludge is introduced through a line 12 into a sludge solubilization tank 13 (sludge decomposition tank) and solubilized. The product of the solubilization treatment is returned through a line 14 and a line 16 to the aeration tank 2 and biologically treated with activated sludge, optionally after having been introduced into a neutralization tank 15 and neutralized or after having been subjected to a decoloring treatment (not shown) with an oxidizing agent. The sludge mother-liquor phase which has been produced by the excess-sludge thickening in the sludge thickening step 8 is optionally added to the return sludge through a line 17, returned to the aeration tank 2 through the line 6 together with the return sludge, and biologically treated with activated sludge. In the operation, when the excess sludge taken out from the return sludge has a high solid concentration, it is not necessary to conduct the sludge thickening step 8 for thickening the excess sludge. Furthermore, although the solubilization treatment product obtained by the solubilization treatment in the sludge solubilization tank 13 may be returned as it is to the aeration tank 2, it is more preferred to dispose the neutralization tank 15 to neutralize the solubilization treatment product before it is returned to the aeration tank 2. This is because the neutralization treatment eliminates the fear of causing environmental changes, e.g., pH change, in the aeration tank 2. For the neutralization treatment, a mineral acid such as sulfuric acid, a waste acid which has been used, or the like is used. The solubilization treatment product obtained by the solubilization treatment in the sludge solubilization tank 13 can be subjected, if necessary, to a decoloring treatment with an oxidizing agent before being returned to the aeration tank 2. By the decoloring treatment, the coloration of the solubilization treatment product which occurs in the volume reduction of the excess sludge can be reduced and the adverse influences of the coloration on the color of the treated water can be diminished. The decoloring treatment can be carried out in combination with the neutralization treatment in the neutralization tank 15. In this case, it is preferred to conduct the decoloring treatment prior to the neutralization treatment to be carried out in the neutralization tank 15, because the solubilization treatment product is more advantageously decolored and the adverse influences can be more advantageously diminished. When the solubilization treatment in the solubilization tank 13 comprises a combination of a treatment with an alkali and a treatment with an oxidizing agent, it is not particularly necessary to conduct the decoloring treatment because the treatment with an oxidizing agent in the solubilization treatment serves also to decolor the solubilization treatment product. Preferred oxidizing agents for use in the decoloring treatment are hydrogen peroxide, sodium peroxide, sodium percarbonate, and the like because such oxidizing agents have high oxidizing power and decompose into substances which are harmless to the activated sludge. The amount of such an oxidizing agent to be added is generally up to 1,000 ppm, preferably from 100 to 500 ppm, of the excess sludge on a dry basis. The time period of the decoloring treatment is generally up to 1 hour, preferably from 10 to 30 minutes.

In the treatment system for the embodiment of the method (1) of the present invention, the proportion of the return sludge which is returned to the aeration tank 2 through the line 6 to the excess sludge which is sent through the line 7 and is then discharged as dewatered excess sludge 11 from the system or introduced into the sludge solubilization tank 13 and solubilized cannot be unconditionally specified because it varies depending on treatment conditions for the treatment system. Very roughly speaking, however, the weight ratio of the return sludge to the excess sludge is generally from 50 : 1 to 1 : 1. Furthermore, the proportion of the excess sludge which is introduced into the sludge solubilization tank 13 and subjected to the solubilization treatment to the excess sludge which is introduced into the sludge dewatering step 10, dewatered, and discharged as dewatered excess sludge 11 from the system also cannot be unconditionally specified because it varies depending on treatment conditions for the treatment system. Very roughly speaking, however, the weight ratio of the excess sludge to be subjected to the solubilization treatment to the excess sludge to be discharged from the system is generally from 1 : 1 to 100 : 1. However, it is possible to subject all the excess sludge to the solubilization treatment to thereby circulate it within the treatment system and eliminate the excess sludge to be discharged from the system. This effect can be obtained by selecting treatment conditions for the treatment system so that, for example, the sludge sediment is subjected to the solubilization treatment in an amount about from 2 to 3.5 times the amount of excess sludge to be produced when no solubilization treatment is carried out.

In general, in an organic waste water treatment system in which an operation for sludge volume reduction by a solubilization treatment is conduced, repetitions of the operation for sludge volume reduction by a solubilization treatment result in an increase in the nitrogen concentration of the treated water especially when the organic waste water to be treated is organic waste water. which is not oligotrophic. The reason for this is as follows. A solubilization treatment of a sludge generally yields solubilized matters rich in nitrogen derived from protein and solid sludge matters rich in carbon generated from lignin and the like. The increase in nitrogen concentration is attributable to these solubilized matters rich in nitrogen. In the treatment system for the embodiment of the method (1) of the present invention, when the treated water has an increased nitrogen content, the nitrogen concentration of the treated water can be reduced by increasing the amount of the dewatered excess sludge 11 to be discharged from the system through the sludge dewatering step 10.

As the aeration tank 2 and sludge sedimentation tank 4 in the method (1) of the present invention, ones which have been used hitherto can be suitably employed. As a thickener for the sludge thickening step 8 also, a thickener which has been used hitherto can be suitably employed. Examples include a gravity precipitator, a floatation separator, a centrifugal separator, a membrane separator, a screw dehydrator, and the like. As a dehydrator for the sludge dewatering step 10 also, a dehydrator which has been used hitherto can be suitably used. Examples include a centrifugal separator, a belt filter dehydrator, a screw press dehydrator, and the like. The solubilization treatment in the sludge solubilization tank 13 is accomplished by carrying out a treatment with an alkali in combination with at least one treatment selected from a treatment with a homogenizer, a treatment with a mixer, a treatment with a mill, a treatment with a high pressure and instantaneous decompression expansion, and a treatment with an oxidizing agent. Namely, the treatment with an alkali chemically destroys the cells of microorganisms contained in the sludge. The cells of the microorganisms contained in the sludge are further destroyed physically by the treatment with a homogenizer, the treatment with a mixer, the treatment with a mill, or the treatment with a high pressure and instantaneous decompression expansion, which each may be carried out in combination with the treatment with an alkali, or are further destroyed chemically through oxidative decomposition by the treatment with an oxidizing agent, which may be carried out in combination with the treatment with an alkali. The various treatments to be carried out in combination with the treatment with an alkali may be used alone or in combination of two or more thereof, if necessary. By the solubilization treatment, a part of the excess sludge is converted to an organic solution. The solubilization treatment product containing the organic solution is returned to the aeration tank 2 optionally after having been subjected to a neutralization treatment in the neutralization tank 15 or to a decoloring treatment with an oxidizing agent. The solubilization treatment can be carried out with heating at 40°C or higher, preferably at from 50 to 100°C, if necessary. When the treatment is carried out with heating, the destruction of the cells of microorganisms contained in the sludge can be further accelerated.

Examples of the alkali to be used in the alkali treatment include sodium hydroxide, sodium carbonate, sodium hydrogen carbonate, calcium hydroxide, calcium carbonate, calcium oxide, and the like. Sodium hydroxide and calcium oxide are especially preferred. The amount of the alkali to be added is preferably from 0.005 N to 0.1 N, more preferably from 0.01 to 0.05 N, based on the excess sludge to be subjected to the solubilization treatment. The pH of the excess sludge is regulated preferably to 10 or higher, more preferably 11 or higher, and the most preferably 12 or higher. The amount of the alkali to be used can be further reduced by carrying out the alkali treatment in combination with a treatment which provides a strong grinding force, such as a treatment with a mill or mixer. When the solubilization treatment is carried out by the alkali treatment only, the solubilization treatment takes generally from 1 to 72 hours, preferably from 2 to 24 hours, even when the treatment is carried out with heating.

The treatment with a homogenizer, a mixer or a mill is accomplished by treating the excess sludge to which an alkali has been added with the homogenizer, the mixer or the mill. As the homogenizer, the mixer or the mill, any known homogenizer, mixer or mill can be suitably used, so long as it can add a mechanical shearing stress or grinding force to the cells of microorganisms contained in the sludge and can destroy the cell membranes and cell walls of the cells. Examples of the treatment include: a technique in which the excess sludge to which an alkali has been added is passed at a high speed through a piping having baffles disposed therein; a technique in which blades having a sharp edge are revolved at a high speed in the excess sludge to which an alkali has been added, as in food mixers; a technique in which the excess sludge is passed through the narrow space between two disks which are revolving at a high speed as in mills for food powdering; and the like. The time period of the solubilization treatment comprising a combination of a treatment with an alkali and a treatment with a homogenizer, mixer or mill is generally from 1 to 60 minutes, preferably from 1 to 30 minutes, and more preferably from 2 to 10 minutes. The time period of the solubilization treatment can be far shorter than that of the solubilization treatment consisting only of a treatment with an alkali.

In the treatment with a high pressure and instantaneous decompression expansion, the excess sludge to which an alkali has been added is pressurized to a high pressure, e.g., from 70 to 180 kg/cm², the sludge is instantaneously released from the highly pressurized state, and the sludge is allowed to instantaneously expand due to the decompression to thereby destroy the cells of microorganisms contained in the sludge. The treatment can be accomplished, for example, by forcing at a high pressure the excess sludge to which an alkali has been added into a piping having baffles disposed therein and then discharging the sludge from the highly pressurized piping into a tank having ordinary pressure. The time period of the solubilization treatment, which comprises a combination of a treatment with an alkali and a treatment with a high pressure and instantaneous decompression expansion, is generally from 1 to 60 minutes, preferably from 5 to 30 minutes. The time period of the solubilization treatment can be far shorter than that of the solubilization treatment consisting of a treatment with an alkali.

Preferred oxidizing agents for use in the treatment with an oxidizing agent are hydrogen peroxide, sodium peroxide, sodium percarbonate, and the like because such oxidizing agents have high oxidizing power and decompose into substances which are harmless to the activated sludge. In the treatment with an oxidizing agent, the oxidizing agent is added to the excess sludge together with an alkali. The pH of the excess sludge to be treated is regulated to preferably 11 or higher, more preferably from 11 to 12.5. Values of excess-sludge pH lower than 11 are undesirable in that sludge solubilization is insufficient. The amount of the oxidizing agent to be added is generally from 10 to 10,000 ppm, preferably from 100 to 1,000 ppm, of the excess sludge on a dry basis. The time period of the solubilization treatment, which comprises a combination of a treatment with an alkali and a treatment with an oxidizing agent, is generally from 1 to 6 hours, preferably from 1 to 4 hours. The time period of the solubilization treatment can generally be shorter than that of the solubilization treatment consisting only of a treatment with an alkali.

According to the method (1) of the present invention, the solubilization treatment of excess sludge can be carried out in a shorter time period using a smaller amount of an alkali than in the solubilization treatment consisting only of a treatment with an alkali. Thus, the solubilization of excess sludge can be further accelerated and the volume of the excess sludge can be efficiently and considerably reduced. Even when compared to the solubilization treatment consisting of a treatment with a homogenizer, a treatment with a mixer, a treatment with a mill, a treatment with a high pressure and instantaneous decompression expansion, or a treatment with an oxidizing agent, the solubilization treatment of excess sludge according to the present invention can be carried out in a shorter time period while attaining further acceleration of the excess-sludge solubilization, whereby the volume of the excess sludge can be efficiently reduced considerably.

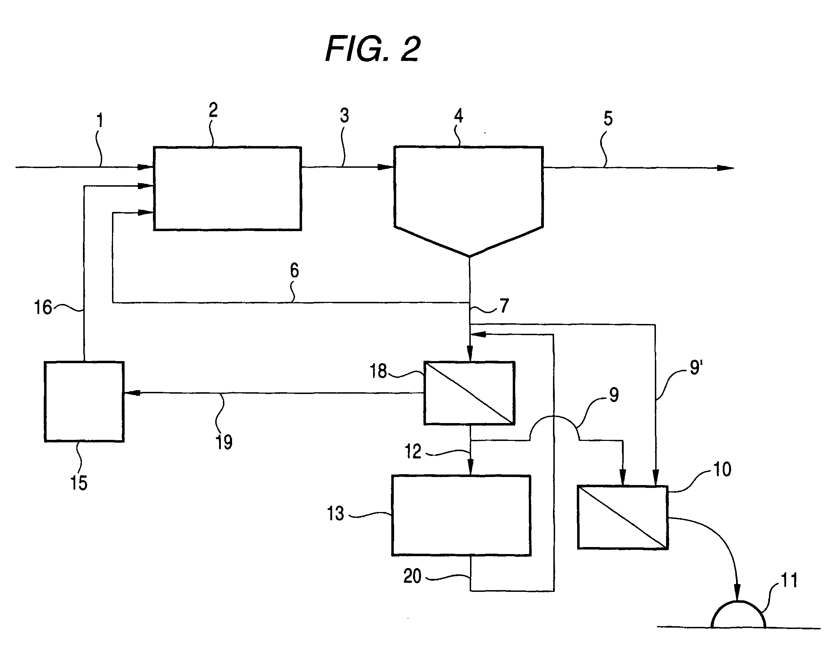

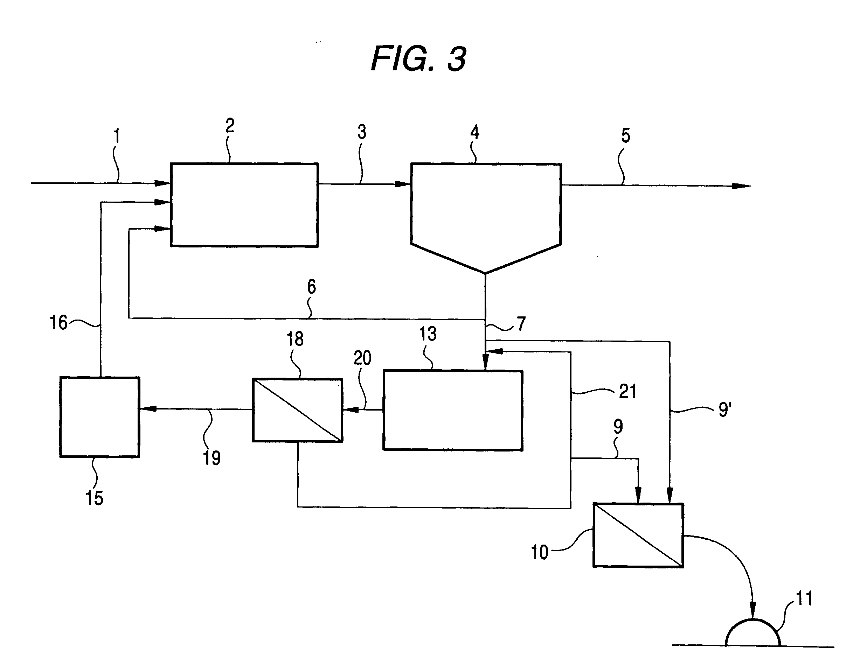

Next, the method (2) of the present invention described above is explained by reference to Figs. 2 and 3 showing embodiments of the method. In the embodiment of the method (2) of the present invention shown in Fig. 2, the product of a solubilization treatment of excess sludge is wholly subjected again to a solid-liquid separation together with the excess sludge from a sludge sedimentation tank, and the concentrated sludge phase separated by the solid-liquid separation is subjected again to the solubilization treatment. On the other hand, the sludge mother-liquor phase separated from the excess sludge by the solid-liquid separation is biologically treated in an aeration tank. Namely, in the treatment system for the embodiment, the product of a solubilization treatment of excess sludge is circulated to the solubilization treatment. The treatment system, a flow sheet shown in Fig. 2, is explained in detail. Organic waste water is fed through a line 1 to an aeration tank 2. In the aeration tank 2, the waste water is aerated and aerobically and biologically treated with activated sludge. The resultant mixture is then sent to a sludge sedimentation tank 4 through a line 3. The supernatant which has been accumulated in the sludge sedimentation tank 4 is discharged therefrom as treated water through a line 5, while the sludge sediment which has been accumulated in the sludge sedimentation tank 4 is returned as a return sludge to the aeration tank 2 through a line 6. To this step, the flow sheet is the same as the flow sheet shown in Fig. 1 illustrating a treatment system for an embodiment of the method (1) of the present invention. Thereafter, a part of the return sludge is taken out, sent as excess sludge to a solid-liquid separation step 18 through a line 7, and thickened to a solid concentration of about from 0.5 to 5% by weight. Thereafter, a part of the concentrated sludge phase obtained from the excess sludge by the solid-liquid separation is introduced through a line 9 into a sludge dewatering step 10 and dewatered. The resultant dewatered excess sludge 11 is discharged from the system. Another part of the concentrated sludge phase obtained from the excess sludge by the solid-liquid separation is introduced through a line 12 into a sludge solubilization tank 13 (sludge decomposition tank) and solubilized. The whole product of the solubilization treatment is discharged through a line 20, caused to join the excess sludge which is passed through the line 7, fed to the solid-liquid separation step 18, and subjected to a solid-liquid separation. If necessary, a part of the excess sludge which is fed to the solid-liquid separation step 18 through the line 7 can be introduced into the sludge dewatering step 10 through a line 9', dewatered, and discharged from the system as dewatered excess sludge 11. Either or both of the introduction of a part of the excess sludge into the sludge dewatering step 10 through the line 9' and the introduction into the sludge dewatering step 10 through the line 9 of a part of the concentrated sludge phase obtained from the excess sludge by solid-liquid separation in the solid-liquid separation step 18 can be carried out, if necessary. The sludge mother-liquor phase of the excess sludge which has been separated from the concentrated sludge phase in the solid-liquid separation step 18 is returned through a line 19 and a line 16 to the aeration tank 2 and biologically treated with activated sludge, optionally after having been introduced into a neutralization tank 15 and neutralized with a mineral acid such as sulfuric acid, a waste acid which has been used, or the like or after having been subjected to a decoloring treatment (not shown) with an oxidizing agent. The neutralization treatment in the neutralization tank 15 can be carried out in combination with the decoloring treatment with an oxidizing agent as in the embodiment of the method (1) of the present invention shown in Fig. 1. When the two treatments are carried out in combination, it is preferred to conduct the decoloring treatment prior to the neutralization treatment to be carried out in the neutralization tank 15, because the solubilization treatment product is more advantageously decolored and the adverse influences of coloration of the solubilization treatment product on the color of the treated water can be diminished. When the solubilization treatment in the sludge solubilization tank 13 comprises a combination of a treatment with an alkali and a treatment with an oxidizing agent, it is not particularly necessary to conduct the decoloring treatment with an oxidizing agent because the treatment with an oxidizing agent in the solubilization treatment serves also to decolor the solubilization treatment product. The oxidizing agent to be used for the decoloring treatment, the amount of the oxidizing agent to be used, and the time period of the decoloring treatment are the same as in the embodiment of the method (1) of the present invention shown in Fig. 1.

In the embodiment shown in Fig. 3, which is another embodiment of the method (2) of the present invention, the product of a solubilization treatment of excess sludge is subjected to a solid-liquid separation. The concentrated sludge phase separated by the solid-liquid separation is subjected again to the solubilization treatment together with the excess sludge from a sludge sedimentation tank. On the other hand, the sludge mother-liquor phase separated by the solid-liquid separation is biologically treated in an aeration tank. Namely, in the treatment system for the embodiment, the product of a solubilization treatment of excess sludge is circulated to the solubilization treatment. The treatment system, a flow sheet shown in Fig. 3, is explained in detail. With respect to the biological treatment in an aeration tank 2 of organic waste water from a line 1, the transfer of a product of the biological treatment to a sludge sedimentation tank 4 through a line 3, the discharge of a supernatant as treated water from the sludge sedimentation tank 4 through a line 5, and the return of a sludge sediment as a return sludge from the sludge sedimentation tank 4 to the aeration tank 2 through a line 6, the flow sheet is the same as the flow sheets shown in Fig. 1 illustrating a treatment system for an embodiment of the method (1) of the present invention, and in Fig. 2 illustrating a treatment system for an embodiment of the method (2) of the present invention. Thereafter, a part of the return sludge is taken out, sent as excess sludge to a sludge solubilization tank 13 (sludge decomposition tank) through a line 7, and solubilized. The product of the solubilization treatment is fed to a solid-liquid separation step 18 through a line 20 and subjected to a solid-liquid separation. Thereafter, a part of the concentrated sludge phase obtained from the solubilization treatment product by the solid-liquid separation is discharged through a line 21, caused to join the excess sludge in the line 7 in such a proportion to give in a mixture having a solid concentration of about from 0.5 to 5% by weight, fed to the sludge solubilization tank 13, and solubilized. Another part of the concentrated sludge phase obtained from the solubilization treatment product by the solid-liquid separation is introduced into a sludge dewatering step 10 through a line 9 and dewatered. The resultant dewatered excess sludge 11 is discharged from the system. If necessary, a part of the excess sludge which is fed to the sludge solubilization tank 13 through the line 7 can be introduced into the sludge dewatering step 10 through a line 9', dewatered, and discharged from the system as dewatered excess sludge 11. Either or both of the introduction of a part of the excess sludge into the sludge dewatering step 10 through the line 9' and the introduction into the sludge dewatering step 10 through the line 9 of another part of the concentrated sludge phase obtained from the excess sludge by a solid-liquid separation in the solid-liquid separation step 18 can be carried out, if necessary. The sludge mother-liquor phase of the solubilization treatment product which has been separated from the concentrated sludge phase in the solid-liquid separation step 18 is returned through a line 19 and a line 16 to the aeration tank 2 and biologically treated with activated sludge, optionally after having been introduced into a neutralization tank 15 and neutralized with a mineral acid such as sulfuric acid, a waste acid which has been used, or the like or after having been subjected to a decoloring treatment (not shown) with an oxidizing agent. The neutralization treatment in the neutralization tank 15 can be carried out in combination with the decoloring treatment with an oxidizing agent as in the embodiment of the method (1) of the present invention shown in Fig. 1 and the embodiment of the method (2) of the present invention shown in Fig. 2. When the two treatments are carried out in combination, it is generally preferred to conduct the decoloring treatment prior to the neutralization treatment to be carried out in the neutralization tank 15. When the solubilization treatment in the sludge solubilization tank 13 comprises a combination of a treatment with an alkali and a treatment with an oxidizing agent, it is not particularly necessary to conduct the decoloring treatment with an oxidizing agent. The oxidizing agent to be used in the decoloring treatment, the amount of the oxidizing agent to be used, and the time period of the decoloring treatment are the same as in the embodiment of the method (1) of the present invention shown in Fig. 1.

In the treatment system for the embodiment of the method (2) of the present invention, the proportion of the excess sludge which is introduced into the sludge dewatering step 10, dewatered, and discharged from the system as dewatered excess sludge 11 to the sludge sediment which is withdrawn from the sludge sedimentation tank 4 through the line 6 cannot be unconditionally specified because it varies depending on treatment conditions for the treatment system. Very roughly speaking, however, the proportion is generally from 1 to 50% by weight. However, all the sludge sediment withdrawn from the sludge sedimentation tank 4 through the line 6 can be circulated within the treatment system to thereby eliminate the excess sludge to be discharged from the system. This effect can be obtained by selecting treatment conditions for the treatment system so that, for example, the amount of the sludge to be subjected to the solubilization treatment is regulated to about from 2 to 3.5 times the amount of the sludge sediment.

As described above with regard to the treatment system for the embodiment of the method (1) of the present invention, repetitions of the operation for sludge volume reduction by a solubilization treatment generally result in an increase in the nitrogen concentration of the treated water especially when the organic waste water to be treated is organic waste water which is not oligotrophic. When the treated water has an increased nitrogen content in the treatment systems for the embodiments of the method (2) of the present invention, the nitrogen content can be reduced by increasing the amount of the dewatered excess sludge 11 to be discharged from the systems. Specifically, in the treatment system for the embodiment shown in Fig. 2, the amount of the dewatered excess sludge 11 to be discharged from the system can be increased by increasing either the amount of that part of the excess sludge which is introduced into the sludge dewatering step 10 through the line 9' or the amount of the part of the concentrated sludge phase obtained from the excess sludge by solid-liquid separation in the solid-liquid separation step 18 which is introduced into the sludge dewatering step 10 through the line 9, especially by increasing the former amount. In the treatment system for the embodiment shown in Fig. 3, the amount of the dewatered excess sludge 11 to be discharged from the system can be increased by increasing either the amount of the part of the excess sludge which is introduced into the sludge dewatering step 10 through the line 9' or the amount of the part of the concentrated sludge phase obtained from the excess sludge by solid-liquid separation in the solid-liquid separation step 18 which is introduced into the sludge dewatering step 10 through the line 9, especially by increasing the former amount.

As the aeration tank 2, the sludge sedimentation tank 4, and a dehydrator for the sludge dewatering step 10 in the method (2) of the present invention, ones which have been used hitherto can be suitably employed as in the method (1) of the present invention. As a solid-liquid separator for the solid-liquid separation step 18 also, a solid-liquid separator which has been used hitherto can be suitably employed. Examples include a gravity precipitator, a floatation separator, a centrifugal separator, a screw dehydrator, and the like. As the solubilization treatment in the sludge solubilization tank 13 can be employed various known solubilization treatments capable of destroying the cells of microorganisms contained in the sludge to thereby convert them into an organic solution. Examples include a treatment with an alkali, a treatment with a homogenizer, a treatment with a mixer, a treatment with a mill, a treatment with a high pressure and instantaneous decompression expansion, and a treatment with an oxidizing agent which are utilizable in the method (1) of the present invention, and the like. Examples further include a treatment with heating, a treatment with ultrasonic, a treatment with oxidation by ozone, a biological treatment with a thermophilic bacterium or the like, a physical treatment with a bead mill, and the like. It is preferred to employ that specific solubilization treatment used in the method (1) of the present invention which comprises a combination of a treatment with an alkali and at least one treatment selected from a treatment with a homogenizer, treatment with a mixer, treatment with a mill, treatment with a high pressure and instantaneous decompression expansion, and treatment with an oxidizing agent at a pH of 11 or higher. It is also preferred to employ a solubilization treatment comprising a combination of a treatment with an alkali and a treatment with ultrasonic.

The treatment with heating can be carried out by heating the sludge at 40°C or higher, preferably at 50 to 100°C. By the solubilization treatment while heating the sludge, the destruction of the cells of microorganisms contained in the sludge can be further accelerated.

The solubilization treatment in which the treatment with ultrasonic is also carried out is generally carried out while keeping an ultrasonic oscillator in direct contact with the excess sludge to which an alkali has been added. As the ultrasonic generator such as an ultrasonic oscillator, a known device can be suitably used. The time period of the solubilization treatment in which an ultrasonic treatment is also carried out is generally from 1 to 60 minutes, preferably from 2 to 10 minutes. The time period of the solubilization treatment can be far shorter than that of the solubilization treatment consisting only of a treatment with an alkali.

According to the method (2) of the present invention, the following problem accompanying the excess-sludge solubilization treatment heretofore in use can be eliminated. Namely, the solubilization treatment of excess sludge which has been used hitherto has a problem that the treatment yields poorly decomposable substances and these poorly decomposable substances not only increase the COD (chemical oxygen demand) of the treated water to impair the quality of the treated water but also inhibit the volume reduction of the excess sludge. In contrast, in the method (2) of the present invention, a product of the solubilization treatment of excess sludge is subjected to a solid-liquid separation and the resultant concentrated sludge phase is repeatedly circulated to the solubilization treatment. Due to the constitution, the solubilization of poorly decomposable substances is accelerated to inhibit the concentration of poorly decomposable substances from increasing. In addition, the poorly decomposable substances are selectively discharged from the system as excess sludge. As a result, the volume of the excess sludge to be discharged from the system can be considerably reduced. Thus, the problem accompanying the excess-sludge solubilization treatment heretofore in use can be sufficiently overcome.

The method (3) of the present invention is explained next. The method (3) of the present invention is the method (2) of the present invention in which the solubilization treatment of excess sludge is a specific solubilization treatment which can be carried out in a shorter time period using a reduced amount of a chemical and which further accelerates the solubilization of excess sludge and can considerably reduce the volume of the excess sludge efficiently. Specifically, this effect can be attained by practicing the method (2) of the present invention in which the solubilization treatment of excess sludge is accomplished by carrying out a treatment with an alkali in combination with at least one treatment selected from a treatment with a homogenizer, a treatment with a mixer, a treatment with a mill, a treatment with a high pressure and instantaneous decompression expansion, a treatment with an oxidizing agent, a treatment with heating, and a treatment with ultrasonic. According to the method (3) of the present invention, the above-described operation comprising subjecting a product of the solubilization treatment of excess sludge to a solid-liquid separation and repeatedly circulating the resultant concentrated sludge phase to the solubilization treatment and the specific operation of excess-sludge solubilization treatment produce a synergistic effect to further accelerate excess-sludge solubilization. As a result, the treated water can be highly effectively inhibited from deteriorating in quality and the volume of the excess sludge can be reduced even more.

The treatment systems for the embodiments of the methods (1) and (2) of the present invention shown in Figs. 1 to 3 each are a treatment system employing a sludge sedimentation tank. However, the methods (1) to (3) of the present invention can be practiced according to a modified flow sheet. For example, the methods can be practiced using: a treatment system in which in place of using the sludge sedimentation tank, the sludge is forcibly withdrawn from the aeration tank itself with a pump at a given rate as in the membrane separation activated sludge method; or a treatment system in which in place of using the sludge sedimentation tank, the sludge which has multiplied and naturally sedimented on the bottom of the aeration tank is periodically withdrawn as in the biofilm method (fixed-bed contact aeration).

The present invention will be explained below in detail by reference to Examples and Comparative Examples. However, the present invention should not be construed as being limited to these Examples.

SS, MLSS, and TOC represent sludge (suspended solids), activated sludge (mixed liquor suspended solids), and a total organic carbon amount (total organic carbon), respectively. All of them as well as BOD and COD can be determined by ordinary methods.

### Example 1

Industrial waste water (BOD: 100-110 mg/L; SS: 30-40 mg/L) was fed to a 40-L aeration tank having an aeration time of 8 hr and activated sludge of MLSS of 3,000 to 3,500 mg/L (BOD-MLSS load: 0.09-0.11 (kg-BOD/kg-MLSS·day)). Thereafter, the activated sludge was separated by sedimentation in a 20-L sedimentation tank. Thus, a sludge sediment having a solid concentration of from 0.5 to 1% by weight was obtained.

In the treatment of the industrial waste water treatment described above, the rate of the industrial waste water treatment was regulated to 0.12 m³/day. A part of the sludge sediment was fed to the step of sludge thickening with a centrifugal separator at a rate of 200 mL/day (4 g/day on dry basis) and the remaining part of the sludge sediment was returned to the aeration tank. The thickening of the sludge sediment with the centrifugal separator yielded a concentrated sludge having a solid concentration of about 2% by weight.

Subsequently, the concentrated sludge was introduced into a batch type sludge solubilization tank having a residence time of 30 minutes, and NaOH was added thereto to give a concentration of 0.05 N based on the liquid in the sludge solubilization tank (pH, about 12.5). The sludge was solubilized while agitating the contents with a homogenizer (Polytron PT45-80) at a high speed (12,000 rpm). To the solubilized sludge (SS: 6,000-9,000 mg/L; TOC: 6,000-8,000 mg/L; pH 11), 2 N sulfuric acid was added to neutralize the sludge to pH 8. Thereafter, the sludge neutralized was introduced into the aeration tank to conduct an aerobic biological treatment.

The treatment system was continuously operated for about 1 month under those conditions. As a result, the sedimentation tank effluent had such water quality to have BOD of from 9 to 12, SS of from 5 to 6 mg/L, and pH of 7.0. The total amount of the excess sludge which was produced during that period was about 46 g.

### Example 2

A test was carried out in the same manner as in Example 1, except that the neutralization treatment of the solubilized sludge with sulfuric acid was omitted. As a result, the sedimentation tank effluent had such water quality to have BOD of from 9 to 11, SS of from 5 to 7 mg/L, and pH of 8.1. The total amount of the excess sludge which was produced during the test period was about 45 g.

### Example 3

A test was carried out in the same manner as in Example 1, except that the neutralization treatment of the solubilized sludge with sulfuric acid was omitted and the solubilized sludge was subjected to a decoloring treatment with hydrogen peroxide (added in an amount of 100 ppm of the solubilized sludge; treatment period: 10 minutes). As a result, the sedimentation tank effluent had such water quality to have BOD of from 8 to 11, SS of from 5 to 6 mg/L, and pH of 8.0. The total amount of the excess sludge which was produced during the test period was about 45 g. The hue of the solubilized sludge changed from light yellow to milk white, and the hue of the sedimentation tank effluent improved accordingly.

### Comparative Example 1

A test was carried out in the same manner as in Example 1, except that the addition of NaOH and treatment with a homogenizer in the sludge solubilization tank were omitted. As a result, the sedimentation tank effluent had such water quality to have BOD of from 7 to 10 and SS of from 3 to 4 mg/L. The total amount of the excess sludge which was produced during the test period was about 115 g.

### Comparative Example 2

A test was carried out in the same manner as in Example 1, except that the treatment with a homogenizer in the sludge solubilization tank was omitted. As a result, the sedimentation tank effluent had such water quality to have BOD of from 9 to 11 and SS of from 3 to 4 mg/L. The total amount of the excess sludge which was produced during the test period was about 67 g.

### Example 4

A test was carried out in the same manner as in Example 1, except that in the sludge solubilization tank, NaOH was added to give a concentration of 0.05 N based on the liquid in the sludge solubilization tank (pH, about 12.5) and hydrogen peroxide was further added in an amount of 1,000 ppm and that sludge solubilization was conduced for 2 hours with stirring (500 rpm). As a result, the sedimentation tank effluent had such water quality to have BOD of from 9 to 11, SS of from 3 to 4 mg/L, and pH of 6.3. The total amount of the excess sludge which was produced during the test period was about 49 g.

### Example 5

A test was carried out in the same manner as in Example 4, except that the neutralization treatment of the solubilized sludge with sulfuric acid was omitted. As a result, the sedimentation tank effluent had such water quality to have BOD of from 8 to 11, SS of from 5 to 6 mg/L, and pH of 6.9. The total amount of the excess sludge which was produced during the test period was about 50 g.

### Example 6

A test was carried out in the same manner as in Example 1, except that in the sludge solubilization tank, a food mixer was used in place of the homogenizer to conduct high speed agitation (10,000 rpm) for 1 hour. As a result, the sedimentation tank effluent had such water quality to have BOD of from 9 to 11 and SS of from 3 to 4 mg/L. The total amount of the excess sludge which was produced during the test period was about 51 g.

### Example 7

Industrial waste water (BOD: 100-110 mg/L; SS: 30-40 mg/L) was fed to a 1-m³ aeration tank having an aeration time of 8 hr and activated sludge of MLSS of 3,000 to 3,500 mg/L (BOD-MLSS load: 0.09-0.11 (kg-BOD/kg-MLSS·day)). Thereafter, the activated sludge was separated by sedimentation in a 0.5-m³ sedimentation tank. Thus, a sludge sediment having a solid concentration of from 0.5 to 1% was obtained.

In the treatment of the industrial waste water treatment described above, the rate of the industrial waste water treatment was regulated to 3 m³/day, and a concentrated sludge having a solid concentration of about 1% was recovered as excess sludge at a rate of 20 L/day (200 g/day on dry basis).

Subsequently, the concentrated sludge was introduced into a batch type sludge solubilization tank having a residence time of 2 minutes, and NaOH was added thereto to give a concentration of 0.05 N based on the liquid in the sludge solubilization tank (pH, about 12.5). The sludge was solubilized while agitating the contents with Pipeline Homomixer (PL-2S, manufactured by Tokushu Kika Kogyo Co., Ltd.), a kind of mixer, at a high speed (3,600 rpm). To the solubilized sludge (SS: 6,000-9,000 mg/L; TOC: 6,000-8,000 mg/L; pH 11), 2 N sulfuric acid was added to neutralize the sludge to pH 8. Thereafter, the sludge neutralized was introduced into the aeration tank to conduct an aerobic biological treatment.

The treatment system was continuously operated for about 1 month under those conditions. As a result, the sedimentation tank effluent had such water quality to have BOD of from 8 to 11, SS of from 5 to 6 mg/L, and pH of 6.7. The amount of the excess sludge which was produced per day during that period was about 97 g/day.

### Example 8

A test was carried out in the same manner as in Example 7, except that the neutralization treatment of the solubilized sludge with sulfuric acid was omitted. As a result, the sedimentation tank effluent had such water quality to have BOD of from 8 to 11, SS of from 5 to 7 mg/L, and pH of 7.8. The amount of the excess sludge which was produced per day during the test period was about 94 g/day.

### Example 9

A test was carried out in the same manner as in Example 6, except that the neutralization treatment of the solubilized sludge with sulfuric acid was omitted and the solubilized sludge was subjected to a decoloring treatment with hydrogen peroxide (added in an amount of 100 ppm of the solubilized sludge; treatment period: 10 minutes). As a result, the sedimentation tank effluent had such water quality to have BOD of from 7 to 12, SS of from 5 to 6 mg/L, and pH of 7.9. The amount of the excess sludge which was produced per day during the test period was about 91 g/day. The hue of the solubilized sludge changed from light yellow to milk white, and the hue of the sedimentation tank effluent improved accordingly.

### Example 10

Industrial waste water (BOD: 100-110 mg/L; SS: 30-40 mg/L) was treated in the same manner as in Example 1. Namely, the waste water was fed to a 40-L aeration tank having an aeration time of 8 hr and activated sludge of MLSS of 3,000 to 3,500 mg/L (BOD-MLSS load: 0.09-0.11 (kg-BOD/kg-MLSS·day)). Thereafter, the activated sludge was separated by sedimentation in a 20-L sedimentation tank. Thus, a sludge sediment having a solid concentration of from 0.5 to 1% by weight was obtained.

In the treatment of the industrial waste water treatment described above, the rate of the industrial waste water treatment was regulated to 0.12 m³/day. A part of the sludge sediment was fed to the step of sludge thickening with a centrifugal separator at a rate of 200 mL/day (4 g/day on dry basis) and the remaining part of the sludge sediment was returned to the aeration tank. The thickening of the sludge sediment with the centrifugal separator yielded a concentrated sludge having a solid concentration of about 2% by weight.

Subsequently, the concentrated sludge was introduced into a batch type sludge solubilization tank having a residence time of 30 minutes, and NaOH was added thereto to give a concentration of 0.05 N based on the liquid in the sludge solubilization tank (pH, about 12). The sludge was solubilized while agitating the contents with a homogenizer at a high speed (12,000 rpm). The sludge sediment was mixed with the solubilized sludge (SS: 6,000-9,000 mg/L; TOC: 6,000-8,000 mg/L). The resultant mixture was separated with a centrifugal separator into a sludge mother-liquor phase and a concentrated sludge phase. The sludge mother-liquor phase was introduced into the aeration tank and subjected to an aerobic biological treatment.

On the other hand, the concentrated sludge phase was repeatedly subjected to the solubilization treatment.

The treatment system was continuously operated for about 2 months under those conditions. As a result, the sedimentation tank effluent had such water quality to have BOD of from 7 to 11 and SS of from 3 to 5 mg/L. The total amount of the excess sludge which was produced during that period was about 112 g.

### Example 11

Industrial waste water (BOD: 100-110 mg/L; SS: 30-40 mg/L) was fed to a 1-m³ aeration tank having an aeration time of 8 hr and activated sludge of MLSS of 3,000 to 3,500 mg/L (BOD-MLSS load: 0.09-0.11 (kg-BOD/kg-MLSS·day)). Thereafter, the activated sludge was separated by sedimentation in a 0.5-m³ sedimentation tank. Thus, a sludge sediment having a solid concentration of from 0.5 to 1% was obtained.

In the treatment of the industrial waste water treatment described above, the rate of the industrial waste water treatment was regulated to 3 m³/day, and a concentrated sludge having a solid concentration of about 1% was recovered as excess sludge at a rate of 20 L/day (200 g/day on dry basis).

Subsequently, the concentrated sludge was introduced into a batch type sludge solubilization tank having a residence time of 1 minute, and NaOH was added thereto to give a concentration of 0.025 N based on the liquid in the sludge solubilization tank (pH, about 11). The sludge was solubilized while agitating the contents with Pipeline Homomic Line Mill (LM-S, manufactured by Tokushu Kika Kogyo Co., Ltd.), a kind of mill, at a high speed (3,600 rpm). To the solubilized sludge (SS: 6,000-9,000 mg/L; TOC: 6,000-8,000 mg/L; pH 10), 2 N sulfuric acid was added to neutralize the sludge to pH 8. Thereafter, the sludge neutralized was introduced into the aeration tank to conduct an aerobic biological treatment.

The treatment system was continuously operated for about 1 month under those conditions. As a result, the sedimentation tank effluent had such water quality to have BOD of from 8 to 12, SS of from 5 to 6 mg/L, and pH of 6.5. The amount of the excess sludge which was produced per day during that period was about 99 g/day.

### Example 12

A test was carried out in the same manner as in Example 11, except that the neutralization treatment of the solubilized sludge with sulfuric acid was omitted. As a result, the sedimentation tank effluent had such water quality to have BOD of from 8 to 11, SS of from 5 to 7 mg/L, and pH of 7.9. The amount of the excess sludge which was produced per day during the test period was about 99 g/day.

### Example 13

A test was carried out in the same manner as in Example 10, except that in the sludge solubilization tank, a treatment with ultrasonic (oscillation output: 1 kW; oscillation frequency: 20 kHz) was carried out for 10 minutes in place of the treatment with a homogenizer. As a result, the sedimentation tank effluent had such water quality to have BOD of from 9 to 11 and SS of from 3 to 4 mg/L. The total amount of the excess sludge which was produced during the test period was about 103 g.

### Comparative Example 3

A test was simultaneously carried out in the same manner as in Example 10, except that the addition of NaOH and treatment with a homogenizer in the sludge solubilization tank were omitted. As a result, the sedimentation tank effluent had such water quality to have BOD of from 6 to 11 and SS of from 4 to 5 mg/L. The total amount of the excess sludge which was produced during the test period was about 227 g.

### Example 14

A test was carried out in the same manner as in Example 1, except that in place of the treatment with a homogenizer in the sludge solubilization tank, a treatment in which the NaOH-containing concentrated sludge was forced at a high pressure into a piping having baffles disposed therein and then instantaneously discharged into an ordinary-pressure tank was carried out for 5 minutes (pressure: 180 kg/cm²; flow rate: 20 L/min). As a result, the sedimentation tank effluent had such water quality to have BOD of from 8 to 12, SS of from 3 to 4 mg/L, and pH of 6.3. The total amount of the excess sludge which was produced during the test period was about 47 g.

### Example 15

A test was carried out in the same manner as in Example 14, except that the neutralization treatment of the solubilized sludge with sulfuric acid was omitted. As a result, the sedimentation tank effluent had such water quality to have BOD of from 8 to 11, SS of from 5 to 6 mg/L, and pH of 7.5. The total amount of the excess sludge which was produced during the test period was about 51 g.

### INDUSTRIAL APPLICABILITY

According to the present invention, excess sludge resulting from the biological treatment of organic waste water can be more efficiently and effectively solubilized than in the solubilization treatment methods heretofore in use without particularly impairing the quality of the treated water, and the amount of the excess sludge which is produced can be considerably reduced. By the method (1) of the present invention, since a specific solubilization treatment comprising a combination of a treatment with an alkali and any of the other treatments specified above is used, the solubilization treatment of excess sludge can be carried out in a shorter time period using a smaller amount of a chemical. Thus, the solubilization of excess sludge can be accelerated and the excess sludge can be efficiently and effectively solubilized, whereby the volume of the excess sludge can be considerably reduced. By the method (2) of the present invention, since a product of the solubilization treatment of excess sludge is subjected to a solid-liquid separation and the resultant concentrated sludge phase is repeatedly circulated to the solubilization treatment as described above, it is possible to considerably reduce the volume of the excess sludge while highly effectively inhibiting the treated water from being impaired in quality. Furthermore, in the method (3) of the present invention, the above-described operation comprising subjecting a product of the solubilization treatment of excess sludge to a solid-liquid separation and repeatedly circulating the resultant concentrated sludge phase to the solubilization treatment and the specific solubilization treatment comprising a combination of a treatment with an alkali and any of the other treatments specified above produce a synergistic effect to considerably reduce the volume of the excess sludge while even more efficiently and effectively inhibiting the treated water from being impaired in quality.

## Claims

1. A method for treating organic waste water, which comprises:
biologically treating organic waste water in a biological-treatment tank;
subjecting the resulting biologically treated mixture to a solid-liquid separation;
subjecting a part or all of sludge resulting from the solid-liquid separation to a solubilization treatment for solubilizing an organic matter contained in the sludge; and
returning the sludge to the biological-treatment tank,
wherein the solubilization treatment is a treatment with an alkali and at least one treatment selected from a treatment with a homogenizer, a treatment with a mixer, a treatment with a mill, a treatment with a high pressure and instantaneous decompression expansion, and a treatment with an oxidizing agent.

2. The method according to claim 1, wherein the treatment with an oxidizing agent is carried out at a pH of 11 or higher.

3. A method for treating organic waste water, which comprises:
biologically treating organic waste water in a biological-treatment tank;
subjecting the resulting biologically treated mixture to a solid-liquid separation;
subjecting a part or all of sludge resulting from the solid-liquid separation to a solubilization treatment for solubilizing an organic matter contained in the sludge; and
returning the sludge to the biological-treatment tank,
wherein the sludge which has been subjected to a solubilization treatment is subjected to a solid-liquid separation,
a part or all of the concentrated sludge phase resulting from the solid-liquid separation is circulated at least once to the solubilization treatment, and
the sludge mother-liquor phase resulting from the solid-liquid separation is returned to the biological-treatment tank.

4. A method for treating organic waste water, which comprises:
biologically treating organic waste water in a biological-treatment tank;
subjecting the biologically treated mixture to a solid-liquid separation;
subjecting a part or all of sludge resulting from the solid-liquid separation to a solubilization treatment for solubilizing an organic matter contained in the sludge; and
returning the sludge to the biological-treatment tank,
wherein the sludge which has been subjected to a solubilization treatment is subjected to a solid-liquid separation,
a part or all of the concentrated sludge phase resulting from the solid-liquid separation is circulated at least once to the solubilization treatment,
the sludge mother-liquor phase resulting from the solid-liquid separation is returned to the biological-treatment tank, and
the solubilization treatment is a treatment with an alkali and at least one treatment selected from a treatment with a homogenizer, a treatment with a mixer, a treatment with a mill, a treatment with a high pressure and instantaneous decompression expansion, a treatment with an oxidizing agent, a treatment with heating, and a treatment with ultrasonic.

5. The method according to any one of claims 1 to 4, wherein the sludge subjected to a solubilization treatment or the sludge subjected to a solid-liquid separation is neutralized before being returned to the biological-treatment tank.

6. The method according to any one of claims 1 to 5, wherein the sludge subjected to a solubilization treatment or the sludge subjected to a solid-liquid separation is subjected to a decoloring treatment with an oxidizing agent before being returned to the biological-treatment tank.
